# EUROPÄISCHE PATENTSCHRIFT

(11) **EP 3 993 892 B1**
(45) Veröffentlichungstag und Bekanntmachung des Hinweises auf die Patenterteilung: **22.11.2023**
(21) Anmeldenummer: 21701674.0
(22) Anmeldetag: 13.01.2021
(51) Int. Cl.: B01D 29/23, B01D 29/90, B01D 35/027, B01D 35/30

(54) **FILTERVORRICHTUNG NEBST FILTERELEMENT**
FILTER DEVICE TOGETHER WITH A FILTER ELEMENT
DISPOSITIF DE FILTRATION AINSI QU'UN ÉLÉMENT FILTRANT

(30) Priorität: 03.02.2020 DE 102020000738
(43) Veröffentlichungstag der Anmeldung: 11.05.2022
(73) Patentinhaber: Hydac Filtertechnik GmbH, 66280 Sulzbach/Saar (DE)
(72) Erfinder: KLEIN, Volkmar, 66482 Zweibrücken (DE); SAKRASCHINSKY, Michael, 66386 St. Ingbert (DE); HENNES, Stefan, 66540 Neunkirchen (DE)
(74) Vertreter: Bartels und Partner, Patentanwälte
(86) Internationale Anmeldenummer: PCT/EP2021/050562
(87) Internationale Veröffentlichungsnummer: WO 2021/156030

(56) Entgegenhaltungen:
- WO-A1-03/082435
- WO-A2-2008/134494
- DE-A1-102017 004 174
- US-A1- 2009 229 231

## Beschreibung

Die Erfindung betrifft eine Filtervorrichtung für die Filtration von Fluiden mit den Merkmalen im Oberbegriff von Anspruch 1. Die Erfindung betrifft ferner ein für eine dahingehende Filtervorrichtung verwendbares Filterelement mit den Merkmalen im Oberbegriff von Anspruch 10.

Durch DE 10 2015 007 691 A1 ist eine Filtervorrichtung als sog. In-Tank-Lösung mit einem Stützteil als Bestandteil des Filtergehäuses und einem darin aufnehmbaren, tauschbaren Filterelement, mit einer zwischen Stützteil respektive Filtergehäuse und dem Filterelement wirkenden Dichteinrichtung sowie mit einer Festlegeeinrichtung zum wiederlösbaren Verbinden von Filtergehäuse mit dem Filterelement bekannt, die ein umlaufendes Kragenteil aufweist und die unter der Wirkung einer Druckfeder als Energiespeicher auf die Dichteinrichtung eine Kraft ausübt, die das Filtergehäuse und das Filterelement gegeneinander fluiddicht abdichtet, wobei das Filtergehäuse zumindest an seinem der Festlegeeinrichtung zugewandten Endbereich ein weiteres umlaufendes Kragenteil aufweist und wobei das Kragenteil der Festlegeeinrichtung konzentrisch innerhalb des Kragenteils des Filtergehäuses geführt ist, das mit einem weiteren Dichtsystem versehen ist.

Dadurch, dass dergestalt für das die Dichtkraft unmittelbar übertragende Bauelement eine axiale Führung gebildet ist, ist eine optimale Übertragung der in Axialrichtung wirkenden Kraft auf das Filterelement gewährleistet, sodass insoweit eine optimale Abdichtung sichergestellt ist. Dahingehende Filtervorrichtungen werden zur Hydraulikölabreinigung regelmäßig im Rahmen von Maschinen und Anlagen eingesetzt.

Zur Gewährleistung der Funktionsfähigkeit von solchen hydraulischen Maschinen und Anlagen nebst deren Komponenten ist es oft erforderlich, Verbrauchsmaterialien in Wartungsbetrieben nach ihrer Erschöpfung durch neue, qualitativ gleichwertige Produkte zu ersetzen. Im üblichen Zeitrahmen möglicher Garantie- und Kulanzforderungen an einen solchen Wartungs-, Reparatur- und Überholungsbetrieb (MRO) von Maschinen und Anlagen möchte dieser gegenüber dem Erstausrüster (OEM) gewährleisten, dass im Wartungsfall einerseits ein Originalprodukt verwendet wird und andererseits, dass ohne den tatsächlichen Einbau des zu tauschenden Originalproduktes eine Wiederinbetriebnahme verlässlich unterbleibt, um dergestalt nachgelagerte Störungen bis zu Ausfällen der genannten Maschinen oder Anlagen durch falsche bzw. fehlende Komponenten zu vermeiden.

Ein klassischer Anwendungsfall für den vorstehend beschriebenen Ansatz sind sog. Hydraulikfilter, deren jeweiliges Filterelement dem Abreinigen von partikulären Verschmutzungen aus einem Fluid, wie Öl, dient. Ist das Filterelement mit den Verschmutzungen zugesetzt, kommt es regelmäßig zu einem Verblocken desselben, und das verbrauchte Filterelement ist gegen ein Neuelement zu tauschen. Anwender solcher Hydraulikfilter greifen dann häufig auf Billig-Filterelemente oder gar Plagiate zurück, wobei für den Anwender teilweise gar nicht erkennbar ist, dass es sich bei dem Ersatzelement um ein minderwertiges Plagiat handelt. An Filterelemente werden jedoch heute, insbesondere im Rahmen des Betriebes moderner Maschinen und Anlagen nebst deren Komponenten, erhöhte Anforderungen gestellt, wie an die Filterfeinheit, die Druckstabilität, die Langlebigkeit, die Unempfindlichkeit gegen elektrostatische Entladungen, die Oberflächenfunktionalität etc.; das sind Anforderungen, die ein Billig-Filterelement oder ein Plagiatprodukt regelmäßig nicht leisten kann. So kommt es häufig in der Praxis zu kompletten Systemausfällen, weil das Ersatz-Filterelement von schlechter Qualität ist gegenüber einem Original-Austauschelement des Herstellers, der als Grund- oder Erstausrüstung regelmäßig den Hydraulikfilter und ein darauf abgestimmtes Original-Filterelement dem Kunden (Anwender) eingangs zur Verfügung stellt. Insbesondere bei Plagiat-Filterelementen, die dann häufig auch noch die Firmen- und/oder die Markenbezeichnung des Original-Herstellers, respektive des Erstausrüsters, auf dem Produkt tragen, kommt im Schadensfall hinzu, dass Regressansprüche kundenseitig direkt beim Originalhersteller geltend gemacht werden, obwohl das Filterelement von einem Billiganbieter oder Plagiateur stammt.

Ein weiteres Problem ist darin zu sehen, dass häufig in der Praxis das Auswechseln des verbrauchten Filterelements gegen ein Neuelement unterbleibt, beispielsweise weil man den Austauschvorgang einfach vergisst oder man ein geeignetes Austauschelement gerade nicht zur Hand hat und die jeweilige, nur mit dem gehäuseseitigen Hydraulikfilter versehene Maschine oder Anlage in Gang setzt, auch wenn der Hydraulikfilter wegen Fehlen des Filterelements überhaupt nicht einsatzbereit ist. Auch insoweit kann es zu massiven Ausfällen von Maschinen und Anlagen kommen.

Die WO 03/082435 A1 beschreibt eine Filtervorrichtung für die Filtration von Fluiden, zumindest bestehend aus einem mittels eines Deckels verschließbaren Filtergehäuse und einem darin auswechselbar aufgenommenen Filterelement, wobei sowohl am Deckel als auch am Filtergehäuse sowie am Filterelement jeweils mindestens ein Funktionselement derart vorhanden ist, dass nur bei einem gleichzeitigen Zusammenwirken aller Funktionselemente die Filtration des Fluids ermöglicht ist.

Weitere Filtervorrichtungen gegen aus der DE 10 2017 004 174 A1, der WO 2008/134494 A2 und der US 2009/0229231 A1 hervor.

Ausgehend von diesem Stand der Technik liegt daher der Erfindung die Aufgabe zugrunde, die bekannten Lösungen dahingehend weiter zu verbessern, dass ein Betrieb von hydraulischen Maschinen und Anlagen nur mit einem Hydraulikfilter möglich ist, in den auch tatsächlich ein Original-Filterelement eingesetzt ist.

Eine dahingehende Aufgabe löst eine Filtervorrichtung mit den Merkmalen des Patentanspruchs 1 in seiner Gesamtheit sowie ein für die Filtervorrichtung vorgesehenes Filterelement mit den Merkmalen des Patentanspruchs 10.

Dadurch, dass sowohl am Deckel als auch am Filtergehäuse sowie am Filterelement jeweils mindestens ein Funktionselement derart vorhanden ist, dass nur bei einem gleichzeitigen Zusammenwirken aller Funktionselemente die Filtration des Fluids ermöglicht ist, ist sichergestellt, dass immer ein spezielles Original-Filterelement in das Filtergehäuse austauschbar eingesetzt ist und dass keinesfalls eine ungewollte Inbetriebnahme der Filtervorrichtung nebst fluidisch angeschlossener Maschinen und Anlagen erfolgen kann, ohne dass das Original tatsächlich in seiner Funktionsstellung eingesetzt ist.

Gemäß dem Kennzeichen von Anspruch 1 ist vorgesehen, dass die Funktionselemente aus, vorzugsweise durchgehenden, Gewindestrecken gebildet sind und dass die Gewindestrecken zumindest von ihrer Steigung her zum einen zwischen Deckel und Filterelement und zum anderen zwischen Filterelement und Filtergehäuse gleich ausgebildet sind. Durch die miteinander korrespondierenden Funktionselemente ist sichergestellt, dass immer nur ein spezielles Original-Filterelement des Erstausrüsters in das Filtergehäuse eingesetzt werden kann und dass eine Inbetriebnahme der Anlage oder Maschine nur erfolgen kann, wenn bei eingesetztem Filterelement der Deckel mit diesem mittels der zugehörigen Funktionselemente, insbesondere in Form der Gewindestrecken, in Wirkverbindung, respektive in Eingriff, steht.

Vorzugsweise ist ferner vorgesehen, dass eine dem Deckel zugewandte Endkappe des Filterelements einen Festlegering trägt, der innen- und außenumfangsseitig jeweils ein Funktionselement, insbesondere in Form einer Gewindestrecke, aufweist. Dergestalt sind die Gewindestrecken für das Filtergehäuse und für den Deckel unverwechselbar voneinander separiert und trotzdem platzsparend benachbart zueinander angeordnet, sodass Fehlbedienungen beim Auseinanderbauen und Zusammensetzen der Filtervorrichtung zwecks Austausch des verbrauchten Filterelementes gegen ein Neuelement vermieden sind.

Bei einer weiteren bevorzugten Ausführungsform der erfindungsgemäßen Filtervorrichtung ist vorgesehen, dass diese eine Endkappe mit dem Festlegering einen Abstandshalter aufweist, der diesen Festlegering auf axialem Abstand zu dem Elementmaterial des Filterelements hält. Auf diese Art und Weise ist der Festlegering mit den Gewindestrecken von den sonstigen Teilen der Endkappe, die das eine Ende des Elementmaterials des Filterelements aufnimmt, axial separiert, was die Ausschraub- und Einschraubvorgänge für das Filterelement gegenüber dem Filtergehäuse bei gleichzeitig sicherer Führung des Elementmaterials im Filtergehäuse in beide entgegengesetzten Richtungen erleichtern hilft.

Bei einer weiteren bevorzugten Ausführungsform der erfindungsgemäßen Filtervorrichtung ist vorgesehen, dass der Abstandshalter derart Fluiddurchlässe aufweist, dass in das Filtergehäuse einströmendes Unfiltrat in das Innere des Filterelements gelangt und nach Durchströmen des Elementmaterials von innen nach außen abgereinigt auf die Filtratseite strömt. Dergestalt ist über die Fluiddurchlässe ein gleichförmiges Einströmen des Unfiltratstroms auf die Innenseite des Filterelements mit seinem Elementmaterial erreicht, was die Abscheideleistung für partikuläre Verschmutzungen erhöht.

Vorzugsweise ist ferner vorgesehen, dass die Elementkappe mit dem vorzugsweise mit Spiel lose eingebrachten Abstandshalter und dem Festlegering außenumfangsseitig eine Dichteinrichtung derart aufweist, dass im eingewechselten Betriebszustand des Filterelements im Filtergehäuse außerhalb des Elementmaterials eine Abdichtung der Unfiltrat- gegenüber der Filtratseite erfolgt. Dergestalt ist auch bei einem Auswechselvorgang sichergestellt, dass nicht ungewollt Unfiltrat auf die Filtratseite der Filtervorrichtung gelangt.

Besonders bevorzugt ist vorgesehen, dass die einzelnen, vorzugsweise als Gewindestrecken ausgebildeten Funktionselemente im Betriebszustand der Vorrichtung, zur Längsachse des Filtergehäuses gesehen, konzentrisch zueinander angeordnet sind. Dergestalt sind die miteinander in Eingriff bringbaren Gewindestrecken quasi in einer gemeinsamen Ebene platzsparend in einem Filterkopf des Filtergehäuses unterbringbar und die Betätigungskräfte zum Verbinden und Lösen der Teile miteinander bzw. voneinander sind gering gehalten. Außerdem sind dergestalt die Gewindestrecken in ihrer Eingriffsposition miteinander gesichert und eine unbeabsichtigte Demontage von außen her ist ausgeschlossen.

Vorzugsweise folgt dabei, von innen nach außen gesehen, auf ein Außengewinde des Deckels ein Innengewinde des Filterelements und auf ein Außengewinde des Filterelements ein Innengewinde des Filtergehäuses mit ihren jeweiligen einzelnen Gewindestrecken, die für eine vereinfachte Herstellung auch allesamt über die gleiche Gewindesteigung verfügen können und aus nur einer Art von Gewinde gebildet sind.

Bei einer bevorzugten Ausführungsform der erfindungsgemäßen Filtervorrichtung ist ferner vorgesehen, dass sie, als Tankeinbaufilter konzipiert, das außerhalb eines Tanks zugeführte Unfiltrat mittels des Filterelements abgereinigt als Filtrat an das Tankinnere abgibt. Dahingehende Tankeinbaufilter gibt es in einer Vielzahl von Ausführungsformen, sodass diese gleichfalls für eine Vielzahl von Anwendungsfällen zum Einsatz kommen können. Auch lassen sich bereits bestehende, ausgelieferte Tankeinbaufilter durch die neu konzipierte Filtervorrichtung bedarfsweise ersetzen. Die Anwendung der erfindungsgemäßen Filtervorrichtung ist hierauf aber nicht eingeschränkt.

Besonders bevorzugt ist ferner ein Filterelement vorgesehen, insbesondere für eine Filtervorrichtung, wie vorstehend beschrieben, bei der das Elementmaterial zumindest eine Endkappe aufweist, die über einen Abstandshalter auf axialem Abstand gehalten einen Festlegering trägt, der innen- und außenumfangsseitig Funktionselemente, insbesondere in Form von Gewindestrecken, aufweist.

Im Folgenden wird die erfindungsgemäße Filtervorrichtung nebst zugehörigem Filterelement anhand der Zeichnung näher erläutert. Dabei zeigen in prinzipieller und nicht maßstäblicher Darstellung die
- Fig. 1: in der Art einer Explosionszeichnung die Filtervorrichtung mit teilweise eingesetztem Filterelement nebst vom Filtergehäuse abgehobenem Deckel;
- Fig. 2: einen Längsschnitt der Filtervorrichtung nach der Fig. 1;
- Fig. 3: eine der Fig. 2 entsprechende Schnittdarstellung der Filtervorrichtung jedoch bei herausgenommenem Filterelement und aufgesetztem Deckel;
- Fig. 4: einen oberen Teilausschnitt der in Fig. 3 gezeigten Filtervorrichtung;
- Fig. 5 und 6: einmal in perspektivischer Draufsicht einmal im Längsschnitt den oberen Teil des Filterelementes;
- Fig. 7: im Längsschnitt die Filtervorrichtung mit teilweise eingesetztem Filterelement sowie ohne Deckel; und
- Fig. 8: den oberen Teil der Filtervorrichtung mit eingesetztem Filterelement und dem in Funktionsposition eingesetzten, insbesondere eingeschraubten Deckel.

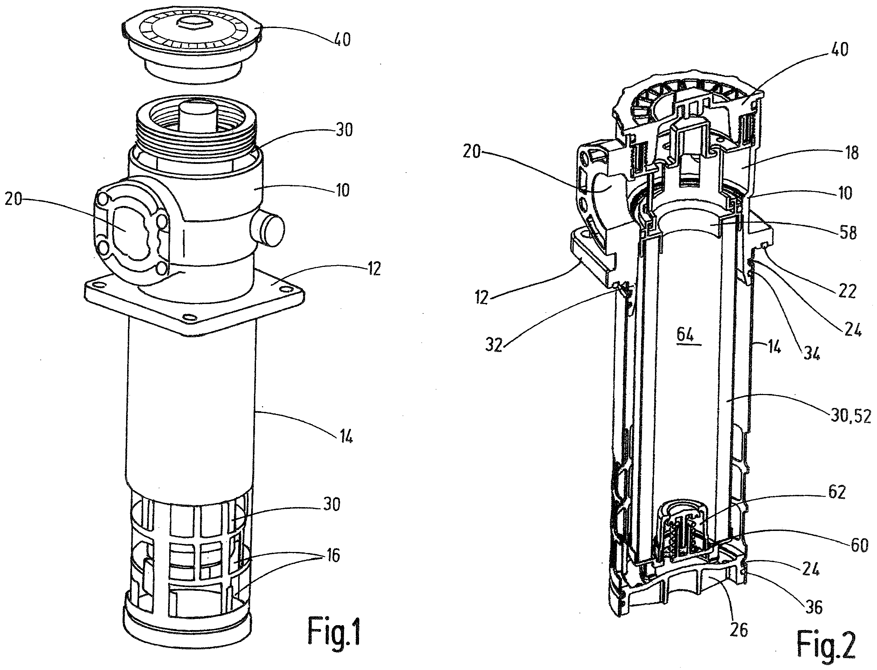

Die Fig. 1 zeigt in der Art einer Explosionszeichnung die Filtervorrichtung als Ganzes, die als sogenannte In-Tank-Lösung konzipiert ist. Die Filtervorrichtung weist ein kopfseitig angeordnetes Filtergehäuse 10 auf, das fußseitig eine Flanschplatte 12 trägt zum Befestigen der Filtervorrichtung auf einer Wandoberseite eines Tanks, insbesondere eines Hydrauliköltanks (nicht dargestellt), der insoweit eine Durchgangsöffnung aufweist, die von der Flanschplatte 12 zwecks Einsetzen der Filtervorrichtung mit ihrem hülsenförmigen, zylindrischen Wandteil 14 in den Tank übergriffen ist. Das mit dünner Wandstärke konzipierte Wandteil 14 weist in Blickrichtung auf die Fig. 1 gesehen an seinem unteren Endbereich fensterartige Durchlassöffnungen 16 auf, die dem Durchtritt von Filtrat der Filtervorrichtung in das Innere des Fluidtanks dienen und die vorzugsweise derart konzipiert sind, dass etwaig im Fluid vorhandene Gasblasen, respektive Luftblasen, an das Fluid im Tank zwanglos abgegeben werden können und dabei über das Tank-Fluidniveau für einen Entgasungsvorgang des Fluids aufsteigen. Insoweit ist vorzugsweise vorgesehen, dass sich die Durchlassöffnungen 16 unterhalb des jeweiligen Fluidniveaus im Tank befinden, was jedoch nicht zwingend ist.

Das in der vorliegenden Ausführungsform in der Art eines Filterkopfes ausgebildete Filtergehäuse 10 umfasst einen Innenraum 18 (siehe Fig. 2), in den radial von außen her ein Fluidanschluss 20 einmündet zwecks Zufuhr von Unfiltrat, das aus einem hydraulischen Kreis (nicht dargestellt) einer hydraulischen Anlage oder der Maschine stammt. Das Filtergehäuse 10 ist als Gussteil ausgebildet und sowohl die Flanschplatte 12 als auch der Fluidanschluss 20 sind einstückiger Bestandteil des Filtergehäuses 10. An der Unterseite der Flanschplatte 12 ist eine umlaufende Ringdichtung 22 angeordnet, die auch bei im Tank eingebrachter Filtervorrichtung das Tankinnere gegenüber der Umgebung abdichtet.

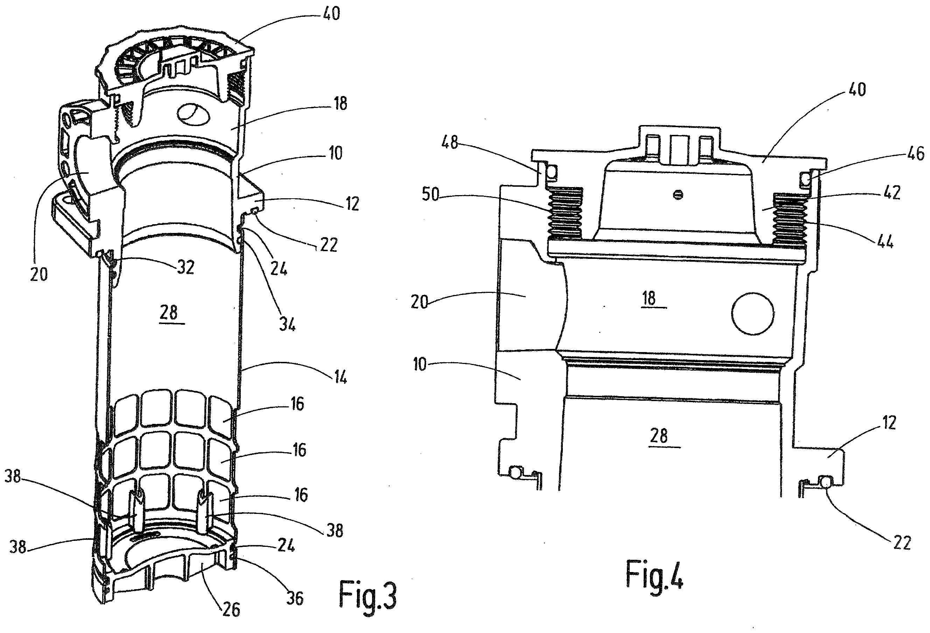

Das einen im Wesentlichen geschlossenen Mantel bildende, zylindrische Wandteil 14 ist mittels Bördelungen 24 mit seinem oberen Endbereich an dem Filtergehäuse 10 ebenso wie an einem unteren endseitig angeordneten Abschlussteil 26 festgelegt. Das plattenartige Abschlussteil 26 schließt einen Aufnahmeraum 28 des Wandteils 14 in Blickrichtung auf die Fig. 3 gesehen nach unten hin gegenüber dem Tankinneren ab. Da das Wandteil 14 mit Aufnahmeraum 28 der Aufnahme eines Filterelementes 30 dient, kann man das Wandteil 14 insoweit noch als Bestandteil des Gesamtfiltergehäuses 10 ansehen.

Die obere Bördelung 24 erstreckt sich außenumfangseitig über den gesamten Umfang des Filterkopfes hinweg. Zum Herstellen der Bördelverbindung weist das Filtergehäuse 10 einen nach unten vorspringenden Anlagering 32 auf, der an seinem unteren freien Ende und unterhalb der oberen Bördelung 24 eine weitere Ringdichtung 34 trägt. Auch das plattenartige Abschlussteil 26 weist eine unterhalb der unteren Bördelung 24 angeordnete Ringdichtung 36 auf, die in diesem Anschlussbereich das Innere des Aufnahmeraumes 28 gegenüber der Tankumgebung abdichtet. An den Verbindungstegen zwischen den Durchlassöffnungen 16 sind Distanzhalter 38 (Fig. 3) angeordnet, die das Filterelement 30 entlang seines unteren Endbereiches in Position und auf vorgebbarem radialen Abstand zu der Innenseite des mantelförmigen Wandteils 14 halten.

Der Innenraum 18 des Filtergehäuses 10 ist nach oben offen und lässt sich mittels eines Deckels 40 verschließen. Wie insbesondere die Fig. 4 zeigt, weist der Deckel 40 in Richtung des Innenraums 18 einen nach unten vorspringenden stegartigen Gewindering 42 auf, der mit seinem Außengewinde 44 insoweit ein Funktionselement ausbildet. Der Deckel 40 ist gemäß der Darstellung nach der Fig. 4 in seiner in das Filtergehäuse 10 eingesetzten Einbausituation gezeigt, wobei der Deckel 40 nur lose eingesetzt ist und über eine Ringdichtung 46 mehr oder minder lose unter Anlage an einem ringförmigen Aufsatzstutzen 48 des Filtergehäuses 10 gelagert ist. Wie sich des Weiteren aus der Fig. 4 ergibt, ist auf derselben Höhe aber mit radialem Abstand auf der Innenseite des kopfartigen Filtergehäuses 10 ein Innengewinde 50 als weiteres Funktionselement angeordnet, das in Richtung des oberen freien Endes des Filtergehäuses 10 unterhalb des Aufsatzstutzens 48 in die Umgebung ausmündet. Bei der in Fig. 4 gezeigten Funktionsstellung ohne eingesetztes Filterelement 10 würde bei einer Inbetriebnahme der Filtervorrichtung der Deckel 40 selbst bei sehr kleinen Betriebsdrücken, wie sie beim Anfahren einer Maschine oder Anlage entstehen, von seinem Dichtsitz am Aufsatzstutzen 48 abheben und es käme zu sofortigen Leckagen und Druckverlusten, die im Rahmen des Betriebs nicht unbeachtet bleiben würden. Dergestalt ist über die erfindungsgemäße Lösung sichergestellt, dass in jedem Fall eine sinnfällige Inbetriebnahme nur möglich ist, wenn ein geeignetes Originalfilterelement 30 in die Filtervorrichtung mit ihrem Filtergehäuse 10 tatsächlich eingesetzt ist.

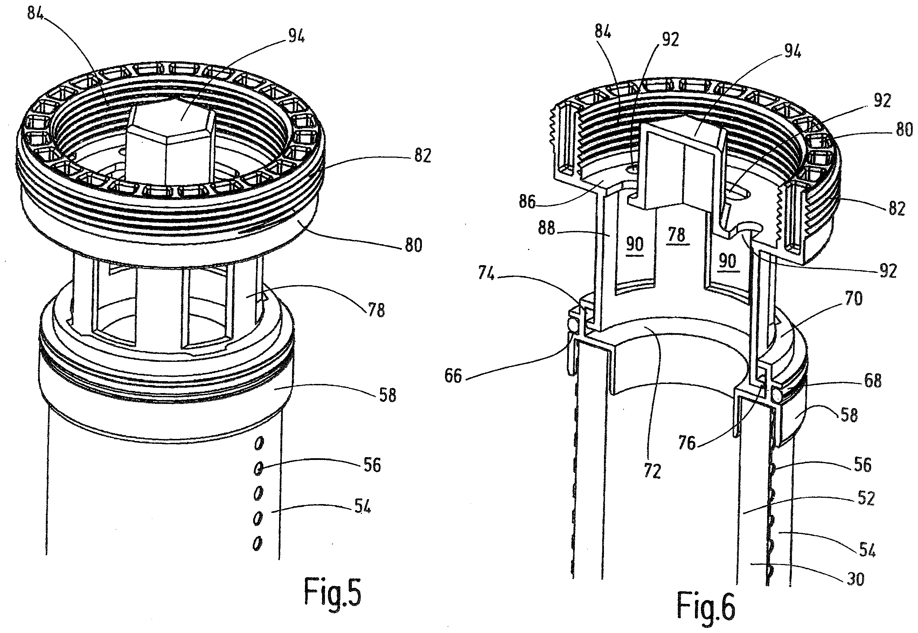

Zur Erläuterung des Filterelementes 30 im Einzelnen wird insbesondere auch Bezug genommen auf die Fig. 2, 5 und 6. Das Filterelement 10 weist ein Elementmaterial 52 auf, das vorzugsweise plissiert (nicht dargestellt) ausgestaltet ist. Das Elementmaterial 52 dient in üblicher Weise dem Abreinigen eines Fluids, wie Öl, von partikulären Verschmutzungen, wobei hierzu ein Unfiltratstrom im Betrieb der Filtervorrichtung das Elementmaterial 52 von innen nach außen durchströmt. Im Hinblick auf die angesprochene Durchströmungsrichtung ist das Elementmaterial 52 außenumfangsseitig von einem zylindrischen Stützrohr 54 umfasst (Fig. 5, 6), das für einen Fluiddurchtritt mit einer Perforation 56 versehen ist, wobei in den Figuren nicht alle Durchtrittsöffnungen der Einfachheit halber gezeigt sind. Wie insbesondere die Fig. 2 zeigt, ist das Elementmaterial 52 zwischen einer oberen Endkappe 58 und einer unteren Endkappe 60 eingefasst. Die untere Endkappe 60 weist als integralen Bestandteil ein in der Hydraulik übliches Bypassventil 62 auf, das bei zugesetztem Elementmaterial 52 ab einem vorgebbaren Differenzdruck öffnet und das Innere 64 des Filterelementes 30 unter Umgehung des Elementmaterials 52 direkt mit dem Tankinneren verbindet, um einen Weiterbetrieb auch bei ausgefallenem, respektive verblocktem, Filterelement 30 zu ermöglichen. Auf der filtratseitigen Abströmseite des Filterelementes 30 ist ein radialer Abstand zwischen dem Wandteil 14 und dem Elementmaterial 52 geschaffen, um dergestalt ein ungestörtes Abströmen des Filtrats auf die Tankinnenseite über die fensterartigen Durchlassöffnungen 16 im Wandteil 14 zu ermöglichen. Vorzugsweise ist die axiale Länge des Filterelementes 30 derart gewählt, dass es mit seiner unteren Endkappe 60 unter Anlage auf dem als Bodenplatte ausgebildeten Abschlussteil 26 spielfrei aufsetzen kann.

Die obere Endkappe 58 umfasst in Blickrichtung auf die Fig. 6 gesehen von oben her das obere Ende des Elementmaterials 52 U-bügelförmig und ist beispielsweise über eine übliche Klebstoffverbindung mit dem Elementmaterial 52 und dem außenumfangseitig angeordneten Stützrohr 54 fest verbunden. In einer darüberliegend angeordneten Eingriffsnut 66 ist eine Ringdichtung 68 angeordnet, die im Einbauzustand des Filterelementes 30 (siehe Fig. 2) die Filtratseite von der Unfiltratseite der Filtervorrichtung mediendicht separiert. Darüberliegend verläuft ein ringförmiger Umfassungsrand 70, der nach innen um 90 Grad abgewinkelt einstückiger Bestandteil der Endkappe 58 (Fig. 6) ist. Der Umfassungsrand 70 bildet mit der Oberseite 72 in axialer Richtung parallel zur Längsachse der Filtervorrichtung gesehen einen Eingriffsraum 74 aus, in dem ein fußseitig vorspringender Eingriffsrand 76 eines Abstandshalters 78 in Eingriff ist. Bei einem am Filtergehäuse 10 festgelegtem Abstandshalter 78 lässt sich dann um eine vorgebbare axiale Wegstrecke das Filterelement 30 parallel zur Längsachse der Filtervorrichtung verfahren, was einen Toleranzausgleich erlaubt, beispielsweise wenn man die Fertigungslänge für das Filterelement 30 nicht genau einhalten kann oder wenn es temperaturbedingt zu Längenänderungen am Filterelement 30 kommt.

Der Abstandshalter 78 ist an seinem oberen freien Ende mit einem Festlegering 80 versehen, der als weitere Funktionselemente außenumfangsseitig ein Außengewinde 82 und innenumfangsseitig ein Innengewinde 84 aufweist. Der Festlegering 80 kann einzelne Hohlkammern zwischen den Gewindestrecken 82, 84 aufweisen und ist über eine Ringplatte 86 an einem hohlzylindrischen Wandteil 88 des Abstandshalters 78 festgelegt, der den Festlegering 80 mit Ringplatte 86 auf axialem Abstand über den nach außen vorspringenden Eingriffsrand 76 hält. Im Wandteil 88 des Abstandshalters 78 sind wiederum fensterartige Fluiddurchlässe 90 eingebracht; ebenso weist die quer zur Längsachse des Filterelementes 30 verlaufende Ringplatte 86 solche Durchlässe 92 auf, die allesamt dazu dienen, einen ungehinderten Fluidzustrom über den Fluidanschluss 20 in das Innere 64 des Filterelementes 30 zu ermöglichen.

Des Weiteren ist auf der Oberseite der Ringplatte 86 mittig ein nach oben vorstehender Mehrkant 94, insbesondere in Form eines Sechskants, vorhanden, der bei abgehobenem Deckel 40 den Angriff eines nicht näher dargestellten Betätigungswerkzeuges ermöglicht, mit dem sich der Festlegering 80 mit seinem Außengewinde 82 mit dem zugehörigen Innengewinde 50 des Filtergehäuses 10 außer oder in Eingriff bringen lässt. Bei der dahingehend rotatorischen Bewegung im Rahmen eines Ausschraubvorganges dreht sich dann der Eingriffsrand 76 des Abstandshalters 78 frei im Eingriffsraum 74 der oberen Endkappe 60 und erst bei einer Drehposition, bei der der Eingriffsrand 76 in axialer Anlage mit dem Umfassungsrand 70 der Endkappe 58 kommt, wird das Filterelement 30 aus dem Filtergehäuse 10 mit dem Wandteil 14 zwangsläufig ausgehoben, wobei hierbei die Reibung des Dichtringes 68 zu überwinden ist, der auf der Innenseite des Filtergehäuses 10 unterhalb des Fluidanschlusses 20 wandseitig anliegt. Im umgekehrten Fall, also bei Einschrauben des Filterelementes 30, drückt dann nach Spielüberwindung der Eingriffsrand 76 bei axialer Anlage auf die Oberseite 72 der Endkappe 58 das Filterelement 30 nach unten, bis es seine eigentliche Funktionsposition im Filtergehäuse 10 einnimmt. Dergestalt ist ein besonders einfacher Auswechselvorgang für das Filterelement 30 möglich und es kann sich nicht derart im Filtergehäuse 10 "festsaugen", als dass ein Austausch nicht hemmnisfrei möglich wäre.

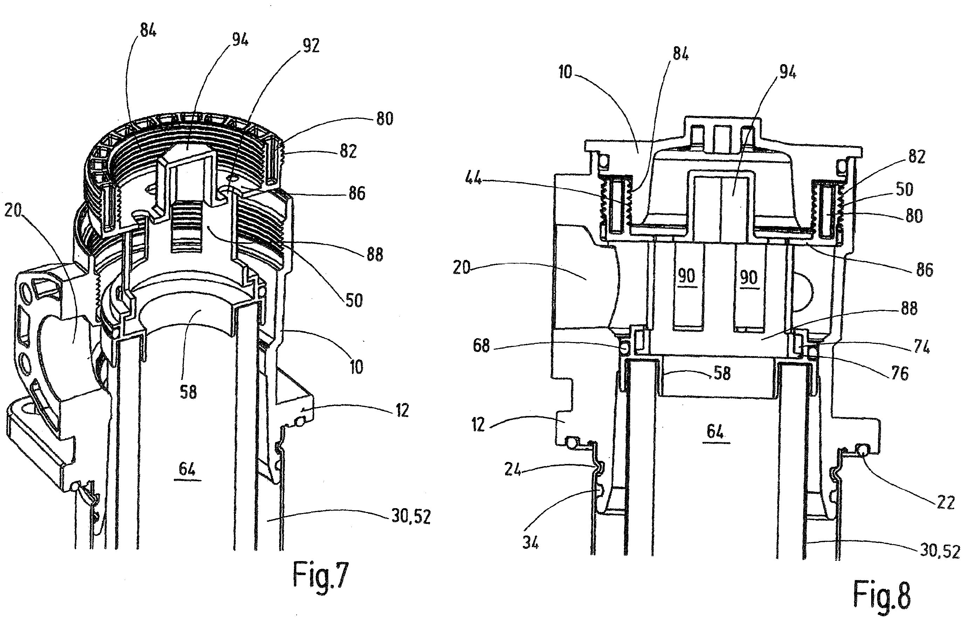

Bei einem Einsatzvorgang des Filterelementes 30 in das Filtergehäuse 10 wird zunächst, wie in Fig. 7 dargestellt, das Filterelement 30 in das Filtergehäuse 10 in Blickrichtung auf die Fig. 7 gesehen axial so lange nach unten eingesetzt bis der Anfang der außenumfangsseitigen Gewindestrecke 82 in beginnenden Eingriff mit dem Innengewinde 50 des Filtergehäuses 10 kommt. Über den Mehrkant 94 erfolgt der Einschraubvorgang so lange bis die in den Fig. 2 und 8 gezeigte vollständige Einschraubposition für das Filterelement 30 im Filtergehäuse 10 erreicht ist.

Anschließend wird der Deckel 10 mit seinem Außengewinde 44 in das Innengewinde 84 am Festlegering 80 des Filterelementes 30 eingeschraubt bis wiederum die vollständige Einbausituation nach den Fig. 2 und 8 erreicht ist, bei der der Deckel 40 die Filtervorrichtung nach obenhin abschließt. Aufgrund der speziell ausgestalteten Funktionselemente in Form der Gewindestrecken 50, 82 lässt sich immer nur ein spezielles Original-Filterelement 30 in das Filtervorrichtungsgehäuse 10 einsetzen. Dem Auswechseln eines Original-Filterelementes 30 mit einem Billigelement oder Plagiatprodukt ist entgegengewirkt.

Ist das Filterelement 30 nicht eingesetzt, kann gemäß der Darstellung nach den Fig. 3 und 4 der Deckel 40 zwar in die obere Aufnahmeöffnung des Filtergehäuses 10 eingesetzt werden, allein die Reibhaftung über den Dichtring 46 des Deckels 40 genügt nicht für eine sichere Fixierung am Filtergehäuse 10. Demgemäß ist es nicht möglich, die Filtervorrichtung respektive die hydraulische Anlage oder die Maschine in Betrieb zu nehmen, ohne dass das Filterelement 30 im Filtergehäuse 10 verankert ist und ohne dass der Deckel 40 eine wirksame Gewindeverbindung mit dem bereits festgelegten Filterelement 30 über die Gewindestrecken 44, 84 eingeht.

Wie insbesondere die Darstellung nach den Fig. 2 und 8 zeigt, sind alle Funktionselemente, respektive Gewindestrecken 44, 50, 82, 84, in einer horizontalen Ebene quer zur Längsachse der Filtervorrichtung angeordnet, wobei paarweise einander zugeordnet die Gewindestrecken 44 und 84 sowie die Gewindestrecken 50 und 82 in Eingriff miteinander kommen. Die angesprochenen Gewindestrecken 44, 50, 82, 84 können wie dargestellt durchgehend ausgebildet sein; können im Bedarfsfall aber auch segmentweise unterbrochen werden. Ferner sollten einander zugehörige Gewindestreckenpaare 44, 84 bzw. 50, 82 mit jeweils einem gleichen Gewinde mit gleicher Steigung versehen sein; andernfalls wäre ein Eingriff der einander zugehörigen Gewindestreckenpaare nicht möglich. Vorzugsweise können auch alle eingesetzten Gewindestrecken 44, 50, 82, 84 aus einer Art von Gewinde mit derselben Gewindesteigung ausgebildet sein.

Mit großem Vorteil ist daher die nach oben hin offene zweiteilige Elementkappe 58 mit Elementaufnahme 72 als dem einen Teil und mit Abstandshalter 78 nebst Festlegering 80 als dem anderen Teil im Bereich des Festlegeringes 80 mit einem Außengewinde 82 zur Elementfixierung im Filtergehäuse 10 und mit einem Innengewinde 84 für die Befestigung des Deckels 40 vorgesehen, der insoweit mit seinem Gewindering 42 entlang der Innenseite des Festlegeringes 80 axial in diesen eingreift. Für einen verbesserten Elementsitz kann im Einbauzustand die Außenfläche der oberen Elementkappe 58 in flächiger Anlage mit dem zugehörigen Innenwandteil des Filtergehäuses 10 sein. Es versteht sich, dass die erfindungsgemäße Filtervorrichtungslösung nicht auf Tankeinbaufilter eingeschränkt zu werden braucht, sondern immer dort zum Einsatz kommen kann, wo man sicherstellen will, dass nur Original-Filterelemente verbaut werden und dass eine Inbetriebnahme von hydraulischen Anlagen und Maschinen nebst deren Komponenten nur möglich ist, sofern ein solches Original-Filterelement auch im Filtergehäuse 10 des Hydraulikfilters tatsächlich aufgenommen ist. Insoweit besteht auch die Möglichkeit, die Filtrationsrichtung von innen nach außen in Richtung von außen nach innen umzukehren.

Gegenstand des Schutzes ist daher auch ein austauschbares Filterelement an sich, das dadurch charakterisiert ist, dass ein Elementmaterial 52 zumindest eine Endkappe 58 aufweist, die über einen Abstandshalter 78 auf axialem Abstand gehalten einen Festlegering 80 trägt, der innen- und außenumfangseitig Funktionselemente, insbesondere in Form von Gewindestrecken 82 bzw. 84 aufweist. Mit diesen Maßnahmen verbleibt das Ersatzteilgeschäft beim Erstausrüster der Filtervorrichtung und der Anwender muss nicht befürchten, dass es bei seinen hydraulischen Maschinen und Anlagen zu Ausfällen kommt.

## Patentansprüche

1. Filtervorrichtung für die Filtration von Fluiden, zumindest bestehend aus einem mittels eines Deckels (40) verschließbaren Filtergehäuse (10) und einem darin auswechselbar aufgenommenen Filterelement (30), wobei sowohl am Deckel (40) als auch am Filtergehäuse (10) sowie am Filterelement (30) jeweils mindestens ein Funktionselement derart vorhanden ist, dass nur bei einem gleichzeitigen Zusammenwirken aller Funktionselemente die Filtration des Fluids ermöglicht ist, **dadurch gekennzeichnet, dass** die Funktionselemente aus Gewindestrecken (44, 50, 82, 84) gebildet sind und dass die Gewindestrecken (44, 50, 82, 84) zumindest von ihrer Steigung her zum einen zwischen Deckel (40) und Filterelement (30) und zum anderen zwischen Filterelement (30) und Filtergehäuse (10) gleich ausgebildet sind.

2. Filtervorrichtung nach Anspruch 1, **dadurch gekennzeichnet, dass** die Funktionselemente aus durchgehenden Gewindestrecken (44, 50, 82, 84) gebildet sind.

3. Filtervorrichtung nach Anspruch 1 oder 2, **dadurch gekennzeichnet, dass** eine dem Deckel (40) zugewandte Endkappe (58) des Filterelements (30) einen Festlegering (80) trägt, der innen- und außenumfangsseitig jeweils ein Funktionselement, insbesondere in Form einer Gewindestrecke (84, 82), aufweist.

4. Filtervorrichtung nach einem der vorstehenden Ansprüche, **dadurch gekennzeichnet, dass** diese eine Endkappe (58) einen Abstandshalter (78) aufweist, der den Festlegering (80) auf axialem Abstand zu dem Elementmaterial (52) des Filterelements (30) hält.

5. Filtervorrichtung nach Anspruch 4, **dadurch gekennzeichnet, dass** der Abstandshalter (78) derart Fluiddurchlässe (90) aufweist, das in das Filtergehäuse (10) einströmendes Unfiltrat in das Innere (64) des Filterelements (30) gelangt und nach Durchströmen des Elementmaterials (52) von innen nach außen abgereinigt auf die Filtratseite strömt.

6. Filtervorrichtung nach Anspruch 4 oder 5, **dadurch gekennzeichnet, dass** die Elementkappe (58) mit dem Abstandshalter (78) und dem Festlegering (80) außenumfangsseitig eine Dichteinrichtung (68) derart aufweist, dass im eingewechselten Betriebszustand des Filterelements (30) im Filtergehäuse (10) außerhalb des Elementmaterials (52) eine Abdichtung der Unfiltrat- gegenüber der Filtratseite erfolgt.

7. Filtervorrichtung nach einem der vorstehenden Ansprüche, **dadurch gekennzeichnet, dass** die einzelnen, vorzugsweise als Gewindestrecken (44, 50, 82, 84) ausgebildeten, Funktionselemente im Betriebszustand, zur Längsachse des Filtergehäuses (10) gesehen, konzentrisch zueinander angeordnet sind.

8. Filtervorrichtung nach einem der vorstehenden Ansprüche, **dadurch gekennzeichnet, dass** in deren Betriebszustand, von innen nach außen gesehen, auf ein Außengewinde (44) des Deckels (40) ein Innengewinde (84) des Filterelements (30) und auf ein Außengewinde (82) des Filterelements (30) ein Innengewinde (50) des Filtergehäuses (10) mit ihren jeweiligen einzelnen Gewindestrecken als den Funktionselementen folgt.

9. Filtervorrichtung nach einem der vorstehenden Ansprüche, **dadurch gekennzeichnet, dass** sie, als Tankeinbaufilter konzipiert, das außerhalb eines Tanks zugeführte Unfiltrat mittels des Filterelements (30) als Filtrat abgereinigt an das Tankinnere abgibt.

10. Filterelement, für eine Filtervorrichtung nach einem der vorstehenden Ansprüche vorgesehen, wobei ein Elementmaterial (52) zumindest eine Endkappe (58) aufweist, die über einen Abstandshalter (78) auf axialem Abstand gehalten einen Festlegering (80) trägt, der innen- und außenumfangsseitig Funktionselemente in Form von Gewindestrecken (84, 82) aufweist, **dadurch gekennzeichnet, dass** die Gewindestrecken (44, 50, 82, 84) zumindest von ihrer Steigung her zum einen zwischen Deckel (40) und Filterelement (30) und zum anderen zwischen Filterelement (30) und Filtergehäuse (10) gleich ausgebildet sind.

## Claims

1. Filter device for the filtration of fluids, at least consisting of a filter housing (10) which can be closed by means of a cover (40) and a filter element (30) which is replaceably accommodated therein, wherein at least one functional element is present in each case both on the cover (40) and on the filter housing (10) and also on the filter element (30) in such a manner that filtration of the fluid is enabled only when all the functional elements cooperate simultaneously, **characterised in that** the functional elements are formed of threaded sections (44, 50, 82, 84) and **in that** the threaded sections (44, 50, 82, 84) are configured identically, at least in terms of their pitch, on the one hand between the cover (40) and the filter element (30) and, on the other hand, between the filter element (30) and the filter housing (10).

2. Filter device according to claim 1, **characterised in that** the functional elements are formed of continuous threaded sections (44, 50, 82, 84).

3. Filter device according to claim 1 or 2, **characterised in that** an end cap (58) of the filter element (30), which end cap is directed towards the cover (40), bears a retaining ring (80) which has a functional element, in particular in the form of a threaded section (84, 82), on the inner and outer circumference in each case.

4. Filter device according to one of the preceding claims, **characterised in that** this one end cap (58) has a spacer (78) which holds the retaining ring (80) at an axial distance from the element material (52) of the filter element (30).

5. Filter device according to claim 4, **characterised in that** the spacer (78) has fluid passages (90) in such a manner that unfiltered medium flowing into the filter housing (10) passes into the interior (64) of the filter element (30) and, after flowing through the element material (52) from inside to outside, flows cleaned to the filtrate side.

6. Filter device according to claim 4 or 5, **characterised in that** the element cap (58) with the spacer (78) and the retaining ring (80) has a sealing device (68) on the outer circumference in such a manner that the unfiltered medium side is sealed off against the filtrate side outside the element material (52) when the filter element (30) is in the filter housing (10) in the exchanged operating state.

7. Filter device according to one of the preceding claims, **characterised in that** the individual functional elements, preferably configured as threaded sections (44, 50, 82, 84), are arranged concentrically with respect to one another in the operating state, viewed towards the longitudinal axis of the filter housing (10).

8. Filter device according to one of the preceding claims, **characterised in that** in their operating state, viewed from inside to outside, an external thread (44) of the cover (40) is followed by an internal thread (84) of the filter element (30) and an external thread (82) of the filter element (30) is followed by an internal thread (50) of the filter housing (10) with their respective individual threaded sections as the functional elements.

9. Filter device according to one of the preceding claims, **characterised in that**, designed as an in-tank filter, it discharges the unfiltered medium supplied outside a tank into the tank interior as filtrate which is cleaned by means of the filter element (30).

10. Filter element, provided for a filter device according to one of the preceding claims, wherein an element material (52) has at least one end cap (58) which, held at an axial distance via a spacer (78), bears a retaining ring (80) which has, on the inner and outer circumference, functional elements in the form of threaded sections (84, 82), **characterised in that** the threaded sections (44, 50, 82, 84) are configured identically, at least in terms of their pitch, on the one hand between the cover (40) and the filter element (30) and, on the other hand, between the filter element (30) and the filter housing (10).

## Revendications

1. Dispositif de filtration pour la filtration de fluides, constitué au moins d'une enveloppe (10) de filtre, pouvant être fermée au moyen d'un couvercle (40), et d'un élément (30) de filtre, qui est reçu de manière à pouvoir être remplacé, dans lequel tant sur le couvercle (40) qu'également sur l'enveloppe (10) du filtre ainsi que sur l'élément (30) de filtre, il y a respectivement au moins un élément fonctionnel de manière à ce que la filtration du fluide ne soit possible que par une coopération simultanée de tous les éléments fonctionnels,
**caractérisé en ce que** les éléments fonctionnels sont constitués de tronçons (44, 50, 82, 84) filetés et **en ce que** les tronçons (44, 50, 82, 84) filetés sont constitués pareillement, au moins par leur pas, d'une part entre le couvercle (40) et l'élément (30) de filtre et d'autre part entre l'élément (30) de filtre et l'enveloppe (10) du filtre.

2. Dispositif de filtration suivant la revendication 1, **caractérisé en ce que** les éléments fonctionnels sont formés de tronçons (44, 50, 82, 84) filetés continus.

3. Dispositif de filtration suivant la revendication 1 ou 2, **caractérisé en ce qu'**une coiffe (58) d'extrémité, tournée vers le couvercle (40), de l'élément (30) de filtre, porte un anneau (80) de fixation qui a, à l'intérieur et l'extérieur du côté du pourtour, respectivement un élément fonctionnel, en particulier sous la forme d'un tronçon (84, 82) fileté.

4. Dispositif de filtration suivant l'une des revendications précédentes, **caractérisé en ce que** cette une coiffe (58) d'extrémité a une entretoise (78), qui maintient l'anneau (80) de fixation à distance axiale du matériau (52) de l'élément (30) de filtre.

5. Dispositif de filtration suivant la revendication 4, **caractérisé en ce que** l'entretoise (78) a des traversées (90) pour du fluide de manière à ce que du non filtrat entrant dans l'enveloppe (10) du filtre arrive à l'intérieur (64) de l'élément (30) de filtre et, après avoir traversé le matériau (52) de l'élément, passe, en étant épuré, de l'intérieur vers l'extérieur du côté du filtrat.

6. Dispositif de filtration suivant la revendication 4 ou 5, **caractérisé en ce que** la coiffe (58) de l'élément, avec l'entretoise (78) et l'anneau (80) de fixation, a du côté du pourtour extérieur un dispositif (68) d'étanchéité de manière à ce que, dans l'état de fonctionnement remplacé de l'élément (30) de filtre, dans l'enveloppe (10) de filtre, il se produise à l'extérieur de la matière (52) de l'élément une étanchéité du côté du non filtrat par rapport au côté du filtrat.

7. Dispositif de filtration suivant l'une des revendications précédentes, **caractérisé en ce que** les divers éléments fonctionnels constitués, de préférence sous la forme de tronçons (44, 50, 82, 84) filetés sont, dans l'état de fonctionnement, considéré par rapport à l'axe longitudinal de l'enveloppe (10) du filtre, disposés concentriquement les uns aux autres.

8. Dispositif de filtration suivant l'une des revendications précédentes, **caractérisé en ce que**, dans son état de fonctionnement, considéré de l'intérieur vers l'extérieur, fait suite à un filetage (44) extérieur de couvercle (40) un filetage (84) intérieur de l'élément (30) de filtre et à un filetage (82) extérieur de l'élément (30) de filtre un filetage (50) intérieur de l'enveloppe (10) du filtre avec leur divers tronçons filetés respectifs comme éléments fonctionnel.

9. Dispositif de filtration suivant l'une des revendications précédentes, **caractérisé en ce qu'**il est conçu en filtre monté sur un réservoir qui cède du non filtrat, apporté de l'extérieur d'un réservoir et épuré comme filtrat, au moyen de l'élément (30) de filtre, à l'intérieur du réservoir.

10. Élément de filtre prévu pour un dispositif de filtration suivant l'une des revendications précédentes, dans lequel un matériau (52) d'élément a au moins une coiffe (58) d'extrémité qui, maintenue à distance axiale par une entretoise (78), porte un anneau (80) de fixation qui a, du côté du pourtour intérieur et extérieur, des éléments fonctionnels sous la forme de tronçons (84, 82) filetés, **caractérisé en ce que** les tronçons (44, 50, 82, 84) filetés sont constitués pareillement au moins par leur pas, d'une part entre le couvercle (40) et l'élément (30) de filtre et d'autre part entre l'élément (30) de filtre et l'enveloppe (10) du filtre.
